# EUROPÄISCHE PATENTSCHRIFT

(11) **EP 1 407 580 B1**
(45) Veröffentlichungstag und Bekanntmachung des Hinweises auf die Patenterteilung: **21.12.2005**
(21) Anmeldenummer: 02750815.9
(22) Anmeldetag: 02.07.2002
(51) Int. Cl.: H04L 12/413, H04L 12/40, H04L 25/02, B60R 16/02

(54) **BUSSYSTEM UND VERFAHREN ZUM AUSTAUSCH VON DATEN**
BUS SYSTEM AND METHOD FOR EXCHANGING DATA
SYSTEME A BUS ET PROCEDE D'ECHANGE DE DONNEES

(30) Priorität: 17.07.2001 DE 10134584
(43) Veröffentlichungstag der Anmeldung: 14.04.2004
(73) Patentinhaber: SIEMENS AKTIENGESELLSCHAFT, 80333 München (DE)
(72) Erfinder: ECKMÜLLER, Robert, 94160 Ringelai (DE)
(86) Internationale Anmeldenummer: PCT/DE2002/002405
(87) Internationale Veröffentlichungsnummer: WO 2003/009537

(56) Entgegenhaltungen:
- WO-A-97/06514
- US-A- 6 111 888
- MANGIANTE G: "LES LIAISONS SERIE V.24/RS-232C, RS-423, RS-422, RS-449" MESURES REGULATION AUTOMATISME, CFE. PARIS, FR, Nr. 622, 28. Mai 1990 (1990-05-28), Seiten 71-74, XP000127960 ISSN: 0755-219X

## Beschreibung

Die Erfindung betrifft ein Bussystem für asynchrone Kommunikation mit wenigstens zwei Busleitungen, auf denen ein differentieller Pegel anliegt, und ein Verfahren zum Austausch von Daten auf einem solchen Bussystem.

Insbesondere in Kraftfahrzeugen werden zunehmen CAN-Busse zur Vernetzung von Steuergeräten und Sensoren eingesetzt. Für Diagnosezwecke (Endprüfung) oder zum Programmieren der am Bus angeschlossenen Steuergeräte am Bandende (Applikation) oder bei Programm-Updates in einer Werkstätte, muss ein externes Gerät mit den Steuergeräten verbunden werden. Hierzu können die Programme der bisher bereits eingesetzten externen Diagnose-/Applikationsgeräte und der entsprechenden Steuergeräte an die Kommunikation im CAN-Protokoll angepasst werden. Neben dem hierfür erforderlichen Aufwand ist aber die langsame Datenübertragung nachteilig, die durch die Datenstruktur des CAN-Protokolls bedingt ist. Es ist daher üblich, über eine zusätzliche, verhältnismäßig aufwendige Schnittstelle, die als Differenzverstärker arbeitet, wie z. B. RS422 oder RS232, und zusätzlichen Busleitungen auf das gewünschte Steuergerät zuzugreifen.

Aus der WO 97/06514 ist ein Fahrzeugdiagnosesystem bekannt, bei dem ein Verbindungselement direkt mit dem CAN-Bus gekoppelt ist und das einen Analysator aufweist, der mit dem Verbindungselement über relativ lange Kabel verbunden ist. In dem Verbindungselement werden die Signale auf RS422-Niveau konvertiert.

Es ist das Ziel der Erfindung, ein Bussystem, das mehrere Steuergeräte miteinander verbindet, auf besonders einfache und effiziente Weise für ein externes Diagnose- oder Applikationsgerät zugänglich zu machen.

Dieses Ziel wird mit einem Bussystem und einem Verfahren zum Austausch von Daten erreicht, wie sie in den unabhängigen Patentansprüchen definiert sind. Vorteilhafte Ausführungsformen der Erfindung sind Gegenstand der Unteransprüche.

Durch die Verwendung einer Hardware-Schnittstelle für asynchrone, bidirektionale Kommunikation in Verbindung mit Transceivern, die den differentiellen Pegel auf den Busleitungen in einen digitalen Pegel umwandeln, können einfache Schnittstellen, die regelmäßig in Standardkontrollern implementiert sind, zum Zugriff auf das Bussystem genutzt werden. Diese müssen selbst keine Differenzverstärkung erzeugen. Dabei ist die elektromagnetischen Verträglichkeit (EMV) der trotzdem erzielten differentiellen Strom- oder Spannungspegel auf den Busleitungen vorteilhaft für die Datenübertragung. Zusammen mit dem Transceiver übernimmt die Hardware-Schnittstelle die Aufgabe einer asynchronen Schnittstelle.

Obwohl in einer besonders bevorzugten Ausführungsform kostengünstige CAN-Transceiver eingesetzt werden, kann die Geschwindigkeit der Datenübertragung gegenüber dem CAN-Protokoll auf etwa das 1,5 bis 2-fache gesteigert werden. Beim Einsatz von UART erhöht sich die Geschwindigkeit gegenüber einem Betrieb unter dem CAN-Protokoll etwa um das 1,8-fache.

Da in einem für das CAN-Protokoll ausgebildeten Mikrokontroller üblicherweise sowohl ein CAN-Kontroller (CAN-Hardware-Schnittstelle) als auch ein UART-Hardware-Schnittstelle implementiert sind ("embedded Controller"), sind für einen Zugang oder Gateway zu einem vorhandenen CAN-Bussystem keine zusätzliche Bausteine erforderlich. Der zugehörige CAN-Transceiver kann sowohl für die Kommunikation mittels CAN als auch mittels UART genutzt werden.

Weitere Vorteile, Merkmale und Anwendungsmöglichkeiten der Erfindung ergeben sich aus der nachfolgenden Beschreibung von Ausführungsbeispielen in Verbindung mit den Zeichnungen. Es zeigen:
- Figur 1: einen CAN-Bus mit mehreren daran angeschlossenen Mikrokontrollern,
- Figur 2: einen CAN-Bus mit zwei Busteilnehmern und
- Figur 3: die Leiterplatte der Anzeigeeinrichtung von Figur 2.

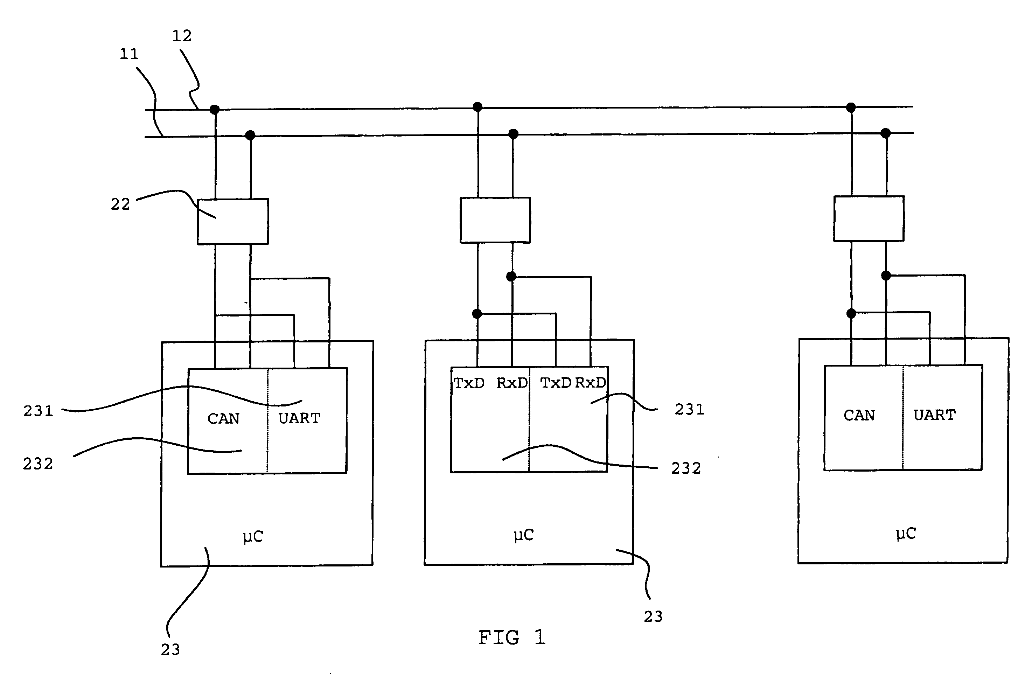

In Figur 1 ist ein Teil eines Bussystems eines Kraftfahrzeugs mit zwei Busleitungen 11 und 12 dargestellt. Es handelt sich hierbei um einen CAN-Bus, der gemäß den CAN-Spezifikationen mit differentiellen Spannungspegeln betrieben wird und einen dominanten und einen rezessiven Zustand aufweist. Der rezessive Zustand stellt sich ohne Zutun eines Busteilnehmers ein. Der dominante Zustand muss von einem aktiven Teilnehmer eingestellt werden. Busleitung 11 überträgt das Signal CANL und Busleitung 12 das Signal CANH. Das Signal CANL kann die Spannungswerte 1,5 V und 2,5 V annehmen, CANH die Spannungswerte 2,5 V und 3,5 V. Beim dominanten Zustand, der dem digitalen Wert 0 oder Low entspricht, liegen an CANL 1,5 V und an CANH 3,5 V an. Beim rezessiven Zustand, der dem digitalen Wert 1 oder High entspricht, liegen sowohl an CANL als auch an CANH 2,5 V an.

Bei den Busteilnehmern kann es sich um ein Display handeln, das die anzuzeigenden Daten von weiteren Busteilnehmern erhält, beispielsweise einer Temperaturmesseinrichtung, einem Radio, einem Navigationsgerät und dergleichen. Jeweils ein CAN-Transceiver 22 eines Busteilnehmers verbindet eine Steuereinheit bzw. einen Mikrokontroller 23 mit den Busleitungen 11, 12 und somit mit anderen Teilnehmern. Die Transceiver 22 setzen in einer Richtung digitale Signale der Mikrokontrollers 23 mit TTL-Pegel in differentielle Signale um und setzen in der Gegenrichtung die differentiellen Signale der Busleitungen 11, 12 in digitale Signale mit 0 V und 5 V um.

Die CAN-Transceiver geben vom zugehörigen Mikrokontroller erzeugte Signale auf die Busleitungen 11, 12 aus und lesen gleichzeitig die ausgegebenen Signale an denselben Mikrokontroller zurück. Dies erfolgt auf einer Zweidrahtleitung mit den Signalleitungen RxD und TxD.

Die zu den Mikrokontroller 23 gehörigen Teilnehmer, bei denen es sich um Steuergeräte und Sensoren handelt, sind nicht dargestellt.

In dem Mikrokontrollern 23 sind sowohl eine UART-Hardware-Schnittstelle 231 als auch eine CAN-Hardware-Schnittstelle bzw. ein CAN-Kontroller 232 als Buskontroller implementiert ("embedded"). Jede der beiden Schnittstellen ist jeweils mit dem Transceiver elektrisch verbunden. Die beiden Buskontroller sind also parallel geschaltet.

Eine UART-Schnittstelle ist grundsätzlich für bidirektionale Kommunikation im Vollduplexbetrieb (gleichzeitiges Lesen und Schreiben) ausgelegt. Aufgrund der Beschaltung mit einem CAN-Transceiver können die UART-Schnittstellen 231 allerdings nur im Halbduplexbetrieb (entweder Lesen oder Schreiben) kommunizieren.

Beim Systemstart wird zunächst jeweils die UART-Schnittstelle 231 aktiviert und der CAN-Kontroller 232 gesperrt, um eine gleichzeitige Kommunikation mit unterschiedlichen Busprotokollen zu vermeiden. Es kann daher sofort mit einem Applizieren von Daten, also dem Programmieren von Busteilnehmern, und dem Prüfen/Diagnostizieren der Teilnehmer begonnen werden. In diesem Modus kann die Datenübertragung mit einer höheren Übertragungsgeschwindigkeit erfolgen als beim Betrieb nach dem CAN-Protokoll.

Werden innerhalb einer vordefinierten Zeitspanne, beispielsweise 5 ms, keine Signale einer UART-Schnittstelle erkannt, wird die UART-Schnittstelle 231 gesperrt und der CAN-Controller 232 aktiviert. Signale einer UART-Schnittstelle können anhand der Datenübertragungsgeschwindigkeit (Baudrate), anhand des Erkennens des CAN-Protokolls oder anhand von Parity-Fehlern von Signalen eines CAN-Kontrollers unterschieden werden. Um die Gewissheit der Erkennung zu erhöhen, können mehrere Erkennungsmethoden kombiniert werden.

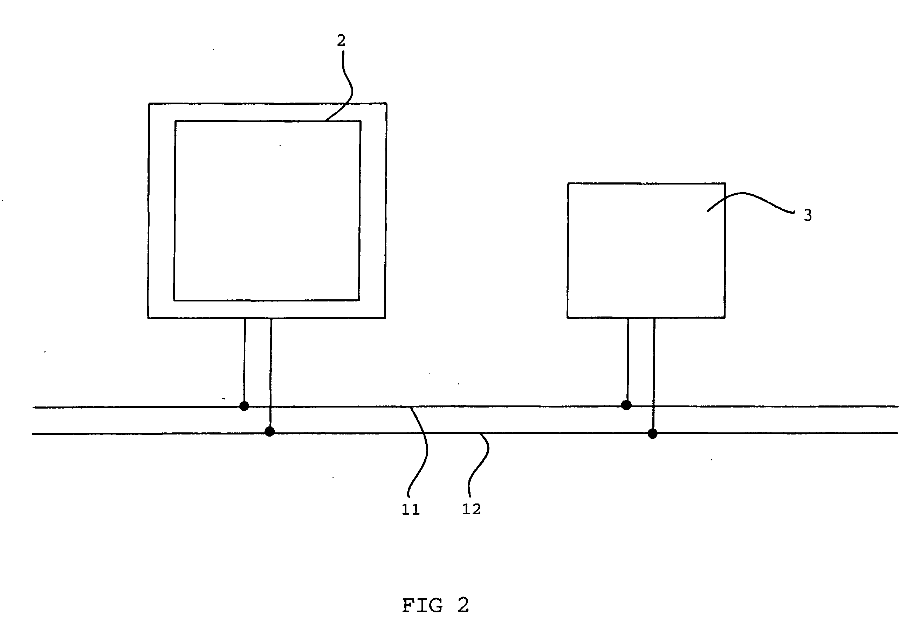

Figur 2 veranschaulicht das Bussystem von Figur 1 mit zwei beispielhaften Busteilnehmern. Dabei handelt es sich um eine Anzeigeeinrichtung 2 eines Fahrerinformationssystems und um ein Steuergerät 3, und genauer um ein Motorsteuergerät.

Eine mit der Anzeigeeinrichtung 2 verbundene Steuereinheit (Mikroprozessor) erhält von dem Steuergerät Daten, um den Kraftstoffverbrauch des Fahrzeugs zu ermitteln und an den Fahrzeugführer auszugeben.

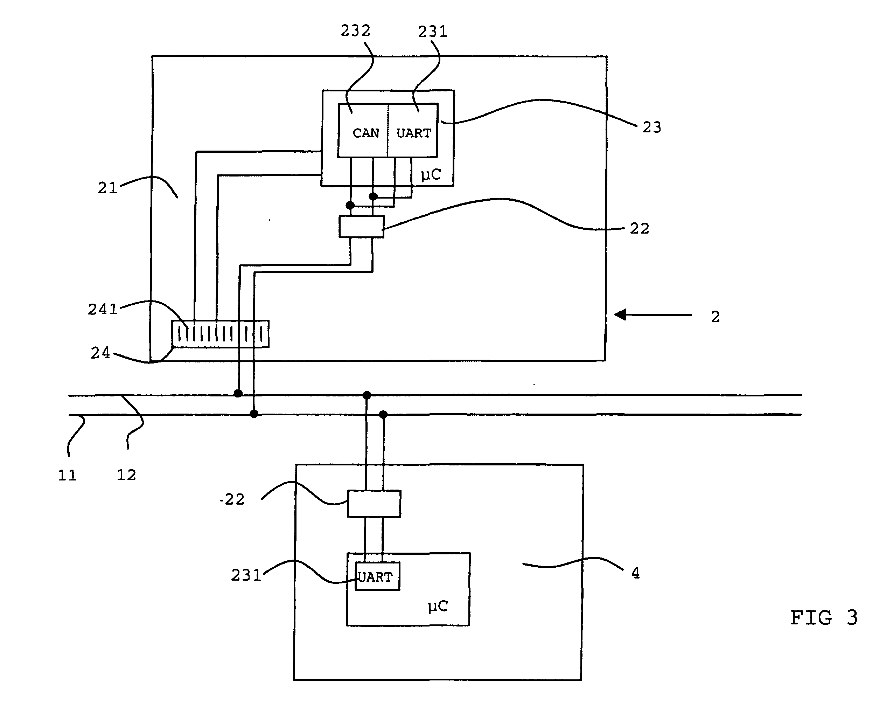

Figur 3 zeigt einen der in Figur 1 dargestellten Mikrokontroller 23 auf einer Leiterplatte 21 eines Busteilnehmers. Bei dem Busteilnehmer handelt es sich um die in Figur 2 dargestellte Anzeigeeinrichtung 2.

Die UART-Hardware-Schnittstelle 231 und der CAN-Kontroller 232 des Mikrokontrollers 23 sind mit denselben elektrischen Kontakten 241 eines Steckverbinders 24 über den Transceiver 22 verbunden. Der Steckverbinder 24 ist in das Gehäuse des Busteilnehmers integriert und stellt eine Verbindung zu einer Energieversorgung und den Busleitungen 11, 12 des CAN-Bus her. Ferner kann über den Steckverbinder auch eine direkte Verbindung - ohne Vermittlung des CAN-Busses zu einem externen Gerät, beispielsweise einem Telefon oder einem Audiogerät, hergestellt werden.

Über den Steckverbinder 24 kann zusätzlich ein externes Programmier- (Applikations-) oder Prüfgerät angeschlossen werden, um Daten in einem an das Bussystem angeschlossenen Teilnehmer zu speichern oder einen Funktionstest eines Teilnehmers vorzunehmen.

Im dargestellten Beispiel ist das externe Programmiergerät 4 über einen separaten (nicht dargestellten) Steckverbinder an einem geeigneten Ort im Kraftfahrzeug mit den Busleitungen 11, 12 und somit mit dem zu programmierenden Busteilnehmer verbunden.

Der Anschluss externer Geräte kann auch über eine drahtlose Schnittstelle erfolgen, beispielsweise mittels einer Infrarotschnittstelle nach dem IRDA-Standard oder einer Bluetooth-Schnittstelle. Die drahtlose Schnittstelle kann eine Verbindung zu dem CAN-Bus oder direkt zu einem externen Gerät herstellen.

## Patentansprüche

1. Bussystem, das aufweist:
- eine erste Hardware-Schnittstelle (232),
- wenigstens zwei Busleitungen (11, 12), auf denen ein differentieller Pegel anliegt, der einen dominanten und einen rezessiven Zustand annehmen kann,
- wenigstens zwei Transceiver (22) für bidirektionale Kommunikation im Halb-Duplexbetrieb, die mit den Busleitungen (11, 12) verbunden sind und die den differentiellen Pegel der Busleitungen in einen digitalen Pegel umwandeln,
- wenigstens eine zweite Hardware-Schnittstelle (231), die für asynchrone, bidirektionale Kommunikation im Vollduplexbetrieb geeignet ist,
**dadurch gekennzeichnet, dass** mindestens einer der wenigstens zwei Transceiver (22) mit der ersten und der zweiten Hardwareschnittstelle (232, 231) verbunden ist.

2. Bussystem nach Anspruch 1, **dadurch gekennzeichnet, dass** wenigstens eine der Hardware-Schnittstellen (231) über den Transceiver (22) mit einem Steckverbinder (24) verbunden ist.

3. Bussystem nach Anspruch 2, **dadurch gekennzeichnet, dass** das Bussystem eine Anzeigeeinrichtung (2) mit wenigstens einem Steuergerät (3) in einem Kraftfahrzeug verbindet und dass der Steckverbinder (24) an der Anzeigeeinrichtung (2) angeordnet ist.

4. Bussystem nach Anspruch 1, **dadurch gekennzeichnet, dass** wenigstens eine der Hardware-Schnittstellen (231, 232) über den Transceiver (22) mit einer drahtlosen Schnittstelle verbunden ist.

5. Bussystem nach einem der vorhergehenden Ansprüche, **dadurch gekennzeichnet, dass** die Transceiver (22) CAN-Transceiver sind.

6. Bussystem nach einem der vorhergehenden Ansprüche, **dadurch gekennzeichnet, dass** eine der Hardware-Schnittstellen eine UART-Schnittstelle ist.

7. Bussystem nach dem vorhergehenden Anspruch, **dadurch gekennzeichnet, dass** eine der Hardware-Schnittstellen ein CAN-Kontroller (232) ist.

8. Bussystem nach dem vorhergehenden Anspruch, **dadurch gekennzeichnet, dass** der CAN-Kontroller (232) und die weitere Hardware-Schnittstelle (231) in einem einzigen Mikrokontroller (23) integriert sind.

9. Verfahren zum Austausch von Daten auf einem Bussystem, das aufweist:
- eine erste Hardware-Schnittstelle (232),
- wenigstens zwei Busleitungen (11, 12), auf denen ein differentieller Pegel anliegt, der einen dominanten und einen rezessiven Zustand annehmen kann,
- wenigstens zwei Transceiver (22) für bidirektionale Kommunikation im Halb-Duplexbetrieb, die mit den Busleitungen (11, 12) verbunden sind und die den differentiellen Pegel der Busleitungen in einen digitalen Pegel umwandeln,
- wenigstens eine zweite Hardware-Schnittstelle (231), die für asynchrone, bidirektionale Kommunikation im Vollduplexbetrieb geeignet ist,
wobei mindestens einer der wenigsten zwei Transceiver (22) mit der ersten und der zweiten Hardware-Schnittstelle (232, 231) verbunden ist, mit den Schritten:
- es wird zunächst die zweite Hardware-Schnittstelle (231) für eine Kommunikation aktiviert und die erste Hardware-Schnittstelle (232) gesperrt,
- werden innerhalb einer definierten Zeitspanne keine Signale der aktivierten zweiten Hardware-Schnittstelle (231) erkannt, wird die zweite Hardware-Schnittstelle (231) gesperrt und die erste Hardware-Schnittstelle (232) aktiviert.

10. Verfahren nach dem vorhergehenden Anspruch, **dadurch gekennzeichnet, dass** die Hardware-Schnittstellen (231, 232) mit unterschiedlichen Datenübertragungsgeschwindigkeiten kommunizieren.

11. Verfahren nach einem der vorhergehenden Verfahrensansprüche, **dadurch gekennzeichnet, dass** Signale der unterschiedlichen Hardware-Schnittstellen (231, 232) voneinander unterschieden werden anhand unterschiedlicher Datenübertragungsgeschwindigkeiten und/oder anhand von Parity-Fehlern.

12. Verfahren nach einem der vorhergehenden Verfahrensansprüche, **dadurch gekennzeichnet, dass** Signale der unterschiedlichen Hardware-Schnittstellen (231, 232) voneinander unterschieden werden anhand von Datenmustern, die von unterschiedlichen Protokollen herrühren, mit denen die Hardware-Schnittstellen (231, 232) kommunizieren.

13. Verfahren nach einem der vorhergehenden Verfahrensansprüche, **dadurch gekennzeichnet, dass** die Hardware-Schnittstellen eine UART-Schnittstelle (231 und ein CAN-Kontroller (232) sind, und dass zunächst die UART-Schnittstelle (231) aktiviert und der CAN-Kontroller (232 gesperrt wird.

14. Verfahren nach dem vorhergehenden Anspruch, **dadurch gekennzeichnet, dass** die Signale der UART-Schnittstelle (231) anhand von Datenmustern erkannt werden, die vom CAN-Protokoll abweichen.

## Claims

1. Bus system which has:
- a first hardware interface (232),
- at least two bus lines (11, 12) on which there is a differential level which can assume a dominant state and a recessive state,
- at least two transceivers (22) for bidirectional communication in half-duplex mode which are connected to the bus lines (11, 12) and which convert the differential level on the bus lines into a digital level,
- at least one second hardware interface (231), which is suitable for asynchronous, bidirectional communication in full-duplex mode, **characterized in that** at least one of the at least two transceivers (22) is connected to the first and the second hardware interface (232, 231).

2. Bus system according to Claim 1, **characterized in that** at least one of the hardware interfaces (231) is connected by means of the transceiver (22) to a plug connector (24).

3. Bus system according to the Claim 2, **characterized in that** the bus system connects a display device (2) to at least one controller (3) in a motor vehicle, and **in that** the plug connector (24) is arranged on the display device (2).

4. Bus system according to Claim 1, **characterized in that** at least one of the hardware interfaces (231, 232) is connected by means of the transceiver (22) to a wireless interface.

5. Bus system according to one of the preceding claims, **characterized in that** the transceivers (22) are CAN transceivers.

6. Bus system according to one of the preceding claims, **characterized in that** one of the hardware interfaces is a UART interface.

7. Bus system according to the preceding claim, **characterized in that** one of the hardware interfaces is a CAN controller (232).

8. Bus system according to the preceding claim, **characterized in that** the CAN controller (232) and the further hardware interface (231) are integrated in a single microcontroller (23).

9. Method for interchanging data on a bus system which has:
- a first hardware interface (232),
- at least two bus lines (11, 12) on which there is a differential level which can assume a dominant state and a recessive state,
- at least two transceivers (22) for bidirectional communication in half-duplex mode which are connected to the bus lines (11, 12) and which convert the differential level on the bus lines into a digital level,
- at least one second hardware interface (231), which is suitable for asynchronous, bidirectional communication in full-duplex mode,
at least one of the at least two transceivers (22) being connected to the first and the second hardware interface (232, 231), having the following steps:
- first the second hardware interface (231) is activated for communication and the first hardware interface (232) is disabled,
- if no signals from the activated second hardware interface (231) are recognized within a defined period of time, the second hardware interface (231) is disabled and the first hardware interface (232) is activated.

10. Method according to the preceding claim, **characterized in that** the hardware interfaces (231, 232) communicate at different data transmission speeds.

11. Method according to one of the preceding method claims, **characterized in that** signals from the different hardware interfaces (231, 232) are distinguished from one another on the basis of different data transmission speeds and/or on the basis of parity errors.

12. Method according to one of the preceding method claims, **characterized in that** signals from the different hardware interfaces (231, 232) are distinguished from one another on the basis of data patterns which come from different protocols which the hardware interfaces (231, 232) use to communicate.

13. Method according to one of the preceding method claims, **characterized in that** the hardware interfaces are a UART interface (231) and a CAN controller (232), and **in that** at first the UART interface (231) is activated and the CAN controller (232) is disabled.

14. Method according to the preceding claim, **characterized in that** the signals from the UART interface (231) are recognized on the basis of data patterns which differ from the CAN protocol.

## Revendications

1. Système de bus comportant:
- une première interface en matériel (232),
- au moins deux lignes de bus (11, 12) sur lesquelles est appliqué un niveau différentiel, qui peut prendre un état dominant et un état récessif,
- au moins deux récepteurs - émetteurs (ou transceivers) (22) pour une communication bidirectionnelle en exploitation en semi-duplex, qui sont reliés aux lignes de bus (11, 12) et qui convertissent le niveau différentiel des lignes de bus en un niveau numérique,
- au moins une deuxième interface en matériel (231), qui est appropriée pour une communication asynchrone et bidirectionnelle en exploitation en duplex intégral,
**caractérisé par le fait que** au moins l'un des au moins deux récepteurs - émetteurs (ou transceivers) (22) est relié à la première et à la deuxième interface en matériel (232, 231).

2. Système de bus selon la revendication 1 **caractérisé par le fait que** au moins l'une des interfaces en matériel (231) est reliée, par l'intermédiaire du récepteur - émetteur (ou transceiver) (22), à un connecteur enfichable (24).

3. Système de bus selon la revendication 2 **caractérisé par le fait que** le système de bus relie un dispositif d'affichage (2) avec au moins un appareil de commande (3) dans un véhicule automobile et que le connecteur enfichable (24) est disposé sur le dispositif d'affichage (2).

4. Système de bus selon la revendication 1 **caractérisé par le fait que** au moins l'une des interfaces en matériel (231, 232) est reliée, par l'intermédiaire du récepteur -émetteur (ou transceiver) (22), à une interface sans fil.

5. Système de bus selon l'une des revendications précédentes **caractérisé par le fait que** les récepteurs - émetteurs (ou transceivers) (22) sont des récepteurs - émetteurs (ou transceivers) CAN.

6. Système de bus selon l'une des revendications précédentes **caractérisé par le fait que** l'une des interfaces en matériel est une interface UART.

7. Système de bus selon la revendication précédente **caractérisé par le fait que** l'une des interfaces en matériel est un contrôleur CAN (232).

8. Système de bus selon la revendication précédente **caractérisé par le fait que** le contrôleur CAN (232) et l'autre interface en matériel (231) sont intégrés dans un seul micro-contrôleur (23).

9. Procédé permettant d'échanger des données sur un système de bus comportant:
- une première interface en matériel (232),
- au moins deux lignes de bus (11, 12) sur lesquelles est appliqué un niveau différentiel, qui peut prendre un état dominant et un état récessif,
- au moins deux récepteurs - émetteurs (ou transceivers) (22) pour une communication bidirectionnelle en exploitation en semi-duplex, qui sont reliés aux lignes de bus (11, 12) et qui convertissent le niveau différentiel des lignes de bus en un niveau numérique,
- au moins une deuxième interface en matériel (231), qui est appropriée pour une communication asynchrone et bidirectionnelle en exploitation en duplex intégral,
où au moins l'un des au moins deux récepteurs - émetteurs (ou transceivers) (22) est relié à la première et à la deuxième interface en matériel (232, 231), le procédé comportant les étapes:
- la deuxième interface en matériel (231) est d'abord activée pour une communication et la première interface en matériel (232) est fermée,
- si, au cours d'un laps de temps défini, aucun signal de la deuxième interface en matériel (231) activée n'est reconnu, la deuxième interface en matériel (231) est fermée et la première interface en matériel (232) est activée.

10. Procédé selon la revendication précédente **caractérisé par le fait que** les interfaces en matériel (231, 232) communiquent avec des vitesses de transmission de données différentes.

11. Procédé selon l'une des revendications de procédé précédentes **caractérisé par le fait que** les signaux des différentes interfaces en matériel (231, 232) sont discernés les uns des autres à l'aide des différentes vitesses de transmission de données et /ou d'erreurs de parité.

12. Procédé selon l'une des revendications de procédé précédentes **caractérisé par le fait que** les signaux des différentes interfaces en matériel (231, 232) sont discernés les uns des autres à l'aide de modèles de données provenant de différents protocoles avec lesquels les interfaces en matériel (231, 232) communiquent.

13. Procédé selon l'une des revendications de procédé précédentes **caractérisé par le fait que** les interfaces en matériel sont une interface UART (231) et un contrôleur CAN (232) et que, d'abord, l'interface UART (231) est activée et le contrôleur CAN (232) est fermé.

14. Procédé selon la revendication précédente **caractérisé par le fait que** les signaux de l'interface UART (231) sont reconnus à l'aide de modèles de données qui diffèrent du protocole CAN.
